(19) Europäisches Patentamt
European Patent Office
Office européen des brevets

(11) EP 0 840 757 B1

(12) EUROPÄISCHE PATENTSCHRIFT

(45) Veröffentlichungstag und Bekanntmachung des Hinweises auf die Patenterteilung:
**01.12.1999 Patentblatt 1999/48**

(21) Anmeldenummer: **96927609.6**

(22) Anmeldetag: **26.07.1996**

(51) Int Cl.[6]: **C08G 65/20**, C08G 65/10

(86) Internationale Anmeldenummer:
**PCT/EP96/03297**

(87) Internationale Veröffentlichungsnummer:
**WO 97/05188 (13.02.1997 Gazette 1997/08)**

# (54) VERFAHREN ZUR HERSTELLUNG VON POLYOXYTETRAMETHYLENGLYCOL

METHOD OF PRODUCING POLYOXYTETRAMETHYLENE GLYCOL

PROCEDE DE PRODUCTION DE POLYOXYTETRAMETHYLENEGLYCOL

(84) Benannte Vertragsstaaten:
**AT BE CH DE DK ES FI FR GB GR IE IT LI LU MC NL PT SE**

(30) Priorität: **27.07.1995 DE 19527532**

(43) Veröffentlichungstag der Anmeldung:
**13.05.1998 Patentblatt 1998/20**

(73) Patentinhaber: **BASF AKTIENGESELLSCHAFT**
**67056 Ludwigshafen (DE)**

(72) Erfinder:
- **SIGWART, Christoph**
**D-69198 Schriesheim (DE)**
- **FISCHER, Rolf**
**D-69121 Heidelberg (DE)**
- **ELLER, Karsten**
**D-67059 Ludwigshafen (DE)**
- **BECKER, Rainer**
**D-67098 Bad Dürkheim (DE)**
- **PLITZKO, Klaus-Dieter**
**D-67117 Limburgerhof (DE)**
- **HEILEN, Gerd**
**D-67435 Neustadt (DE)**

(74) Vertreter: **Isenbruck, Günter, Dr. et al**
**Patent- und Rechtsanwälte,**
**Bardehle-Pagenberg-Dost-Altenburg-Geissler-Isenbruck**
**Theodor-Heuss-Anlage 12**
**68165 Mannheim (DE)**

(56) Entgegenhaltungen:
**WO-A-92/14773**
**WO-A-96/27626**
**DE-A- 4 316 138**

- **DATABASE WPI Derwent Publications Ltd., London, GB; AN 70-29238r(17) XP002021594 & SU,A,248 218 (ORGANIC CHEM INST ACAD SC)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 840 757 B1

## Beschreibung

Die vorliegende Erfindung betrifft ein Verfahren zur Herstellung von Copolymeren aus Tetrahydrofuran (THF) und 2-Butin-1,4-diol durch katalytische Polymerisation von THF. Insbesondere betrifft die Erfindung ein Verfahren zur Herstellung von Polyoxytetramethylenglycol.

Polyoxytetramethylenglycol, auch als Polytetrahydrofuran (PTHF) bezeichnet, wird weltweit produziert und dient als Zwischenprodukt zur Herstellung von Polyurethan-, Polyester- und Polyamid-Elastomeren, zu deren Herstellung es als Diolkomponente eingesetzt wird. Der Einbau von PTHF in diese Polymere bewirkt, daß diese weich und flexibel werden, weshalb PTHF auch als Weichsegment-Komponente für diese Polymere bezeichnet wird.

Die kationische Polymerisation von Tetrahydrofuran (THF) mit Hilfe von Katalysatoren wurde von Meerwein et al. (Angew. Chem. 72, 927 (1960)) beschrieben. Als Katalysatoren werden dabei entweder vorgeformte Katalysatoren verwendet, oder die Katalysatoren werden in situ im Reaktionsgemisch erzeugt. Dies geschieht dadurch, daß im Reaktionsmedium mit Hilfe starker Lewis-Säuren, wie Bortrifluorid, Aluminiumchlorid, Zinntetrachlorid, Antimonpentachlorid, Eisen(III)chlorid oder Phosphorpentafluorid oder mittels starker Brönsted-Säuren, wie Perchlorsäure, Tetrafluoroborsäure, Fluorsulfonsäure, Chlorsulfonsäure, Hexachlorozinn(IV)säure, Iodsäure, Hexachloroantimon(V)säure oder Tetrachloroeisen(III)säure und mit Hilfe von als Promotoren bezeichneten reaktiven Verbindungen, wie Alkylenoxiden, z.B. Ethylenoxid, Propylenoxid, Epichlorhydrin, Orthosäureestern, Acetalen, α-Halogenether, Acetylchlorid, Carbonsäureanhydriden, Thionylchlorid oder Phosphoroxychlorid Oxoniumionen erzeugt werden, die die Polymerisation des THF initiieren. Aus der Vielzahl dieser Katalysatorsysteme haben jedoch nur wenige technische Bedeutung erlangt, da sie teilweise hoch korrosiv sind und/oder bei der Herstellung des PTHF zu verfärbten PTHF-Produkten mit nur beschränkter Verwendbarkeit führen. Viele dieser Katalysatorsysteme wirken darüber hinaus nicht im eigentlichen Sinne katalytisch, sondern müssen, bezogen auf das herzustellende Makromolekül, in stöchiometrischen Mengen eingesetzt werden und werden bei der Polymerisation verbraucht.

In US-A-3 358 042 ist die Herstellung von PTHF mit Fluorsulfonsäure als Katalysator beschrieben. Ein besonderer Nachteil der Verwendung halogenhaltiger Katalysatorverbindungen ist, daß diese zur Bildung halogenierter Nebenprodukte bei der PTHF-Herstellung führen, die vom reinen PTHF nur sehr schwierig abzutrennen sind und dessen Eigenschaften nachteilig beeinflussen.

Bei der Herstellung von PTHF in Gegenwart der genannten Promotoren werden diese Promotoren in das PTHF-Molekül eingebaut, so daß als primäres Produkt der THF-Polymerisation nicht PTHF entsteht, sondern ein PTHF-Derivat. Beispielsweise werden Alkylenoxide als Comonomere in das Polymer eingebaut, mit der Folge, daß THF-Alkylenoxid-Copolymere mit anderen Eigenschaften, insbesondere anderen Anwendungseigenschaften als PTHF, gebildet werden.

Werden Carbonsäureanhydride als Promotoren verwendet, so entstehen primär PTHF-Diester, aus denen PTHF in einer weiteren Umsetzung, z.B. durch Verseifung oder Umesterung (vgl. US-A-2 499 725 und DE-A 27 60 272), freigesetzt werden muß.

Gemäß US-A-5 149 862 wird sulfatdotiertes Zirkoniumdioxid als saurer heterogener, im Reaktionsmedium unlöslicher Polymerisationskatalysator verwendet. Zur Beschleunigung der Polymerisation wird dem Reaktionsmedium ein Gemisch aus Essigsäure und Acetanhydrid zugesetzt, da in Abwesenheit dieser Promotoren die Polymerisation nur sehr schleppend verläuft und z.B. während eines Zeitraums von 19 Stunden nur ein Umsatz von 6% erzielt wird. Bei diesem Verfahren werden PTHF-Diacetate gebildet, die anschließend durch Verseifung oder Umesterung in PTHF umgewandelt werden müssen.

JP-A 83 028/1983 lehrt die Polymerisation von THF in Gegenwart eines Carbonsäurehalogenids oder Carbonsäureanhydrids, wobei eine Heteropolysäure als Katalysator benutzt wird. Dabei entstehen ebenfalls PTHF-Diester, welche zu PTHF hydrolysiert werden müssen.

PTHF-Diester entstehen ebenfalls bei der Polymerisation von chemisch vorbehandeltem THF mit Bleicherdekatalysatoren in Gegenwart von Carbonsäureanhydriden, z.B. Acetanhydrid, nach EP-A-0 003 112. Einen prinzipiellen Nachteil dieses THF-Polymerisationsverfahrens stellen die Kosten dar, die für den Einsatz von Acetanhydrid und dessen Abspaltung aus dem primär gebildeten PTHF-Derivat (Methylester) aufgewendet werden müssen.

Wird dagegen die THF-Polymerisation mit Wasser als Telogen (kettenabbrechende Substanz) durchgeführt, so entsteht direkt PTHF. Nach US-A-4 120 903 kann PTHF aus THF und Wasser mit Hilfe von supersauren Nafion®-Ionenaustauscherharzen hergestellt werden. Nachteilig an diesem Verfahren ist das hohe Molekulargewicht des gebildeten PTHFs, das bei etwa 10.000 Dalton liegt. Solch hochmolekulares PTHF hat bislang keine technische Bedeutung erlangt.

In US-A-4 568 775 und US-A-4 658 065 wird ein Verfahren zur Herstellung von PTHF bzw. die Copolymerisation von THF mit einem Polyol beschrieben, wobei Heteropolysäuren als Katalysatoren angewendet werden. Die Heteropolysäuren sind zu einem gewissen Grad in der Polymerisationsmischung und im Polymerisat löslich und müssen, da sie Verfärbungen des PTHF-Produktes verursachen, durch aufwendige technische Maßnahmen - Zusatz eines Kohlenwasserstoffs zur Ausfällung der Heteropolysäure, Abtrennung der ausgefällten Heteropolysäure und Abtrennung des zugesetzten Kohlenwasserstoffs - aus diesem entfernt werden.

In US-A-4 303 782 werden Zeolithe zur Herstellung von PTHF eingesetzt. Die nach diesem Verfahren erhältlichen THF-Polymeren haben jedoch extrem hohe mittlere Molekulargewichte - $M_n$ = 250.000 bis 500.000 Dalton - und konnten sich für die oben genannten Anwendungszwecke nicht durchsetzen. Dementsprechend hat auch dieses Verfahren keine industrielle Bedeutung erlangt. Ein weiterer schwerwiegender Nachteil dieses Verfahrens ist die geringe Raum-Zeit-Ausbeute (z.B. 4% PTHF in 24 Stunden), die mit den darin verwendeten Zeolithen erzielt wird.

Alle der vorgenannten Verfahren zur direkten Herstellung von PTHF haben, vor allem für PTHF im technisch interessanten Molmassenbereich von 500 bis 3.500 Dalton, den Nachteil niedriger Raum-Zeit-Ausbeuten bei heterogener Katalyse oder den Nachteil einer aufwendigen Abtrennung des Katalysators bei homogener Katalyse.

Der vorliegenden Erfindung lag daher die Aufgabe zugrunde, ein Verfahren zu finden, das es ermöglicht, PTHF in hohen Raum-Zeit-Ausbeuten, d.h. mit hoher Selektivität bei hohem THF-Umsatz, bei einfacher Katalysatorabtrennung zu gewinnen.

Überraschenderweise wurde gefunden, daß sich diese Aufgabe lösen läßt, indem man Tetrahydrofuran an einem heterogenen stark sauren Katalysator in Gegenwart von 2-Butin-1,4-diol polymerisiert und anschließend die C-C-Dreifachbindungen enthaltenden Polyoxytetramethylenglycole zu Polyoxytetramethylenglycol katalytisch hydriert. Der Reaktionsablauf läßt sich durch die folgende Gleichung beschreiben, wobei als Reaktionsprodukt der Umsetzung von THF mit 2-Butin-1,4-diol nur eines der möglichen Copolymere angegeben ist.

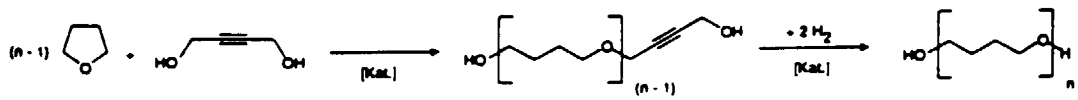


Somit betrifft die Erfindung ein Verfahren zur Herstellung von Polyoxytetramethylenglycolen bzw. Copolymeren aus THF und 2-Butin-1,4-diol durch katalytische Polymerisation von THF, wobei man die Polymerisation an einem heterogenen sauren Katalysator, der Säurezentren der Säurestärke $pK_a < +2$ in einer Konzentration von mindestens 0,005 mmol/g Katalysator besitzt, in Gegenwart von 2-Butin-1,4-diol durchführt. Insbesondere betrifft die Erfindung ein Verfahren zur Herstellung von Polyoxytetramethylenglycol, wobei man die erfindungsgemäß hergestellten Dreifachbindungen enthaltenden Copolymeren aus THF und 2-Butin-1,4-diol bzw. Polyoxytetramethylenglycole in Gegenwart von Wasserstoff bei einer Temperatur von 20 bis 300 °C und einem Druck von 1 bis 300 bar an einem Hydrierkatalysator umsetzt. Bevorzugte Ausführungsformen der Erfindung sind in den Unteransprüchen definiert.

Als Polymerisationskatalysatoren werden erfindungsgemäß bevorzugt Trägerkatalysatoren aus einem oxidischen Trägermaterial verwendet, die sauerstoffhaltige Molybdän- oder Wolframverbindungen oder Gemische solcher Verbindungen als katalytisch aktive Verbindungen enthalten und die weiterhin gewünschtenfalls zusätzlich mit Sulfat- oder Phosphat-Gruppen dotiert sein können. Zur Überführung in ihre katalytisch aktive Form werden die Trägerkatalysatoren nach Aufbringung der Vorläuferverbindungen der katalytisch aktiven, sauerstoffhaltigen Molybdän- und/ oder Wolframverbindungen auf das Trägermaterial einer Calcinierung bei 500 °C bis 1000 °C unterworfen, wobei das Trägermaterial und die Vorläuferverbindung eine Umwandlung in die erfindungsgemäß einsetzbaren Katalysatoren erfahren.

Als oxidischer Träger sind z.B. Zirkoniumdioxid, Titandioxid, Hafniumoxid, Yttriumoxid, Eisen(III)oxid, Aluminiumoxid,- Zinn(IV)oxid, Siliciumdioxid, Zinkoxid oder Gemische dieser Oxide geeignet. Besonders bevorzugt sind Zirkoniumdioxid und/oder Titandioxid.

Die erfindungsgemäß anwendbaren Katalysatoren enthalten im allgemeinen 0,1 bis 50 Gew.-%, vorzugsweise 1 bis 30 Gew.-% und besonders bevorzugt 5 bis 20 Gew.-% der katalytisch aktiven, sauerstoffhaltigen Verbindungen des Molybdäns oder Wolframs oder der Gemische der katalytisch aktiven, sauerstoffhaltigen Verbindungen dieser Metalle, jeweils bezogen auf das Gesamtgewicht des Katalysators, und da die chemische Struktur der katalytisch aktiven, sauerstoffhaltigen Verbindungen des Molybdäns und/oder Wolframs bislang nicht genau bekannt ist, sondern nur z.B. aus den Daten der IR-Spektren der erfindungsgemäß anwendbaren Katalysatoren postuliert werden kann, jeweils berechnet als $MoO_3$ bzw. $WO_3$.

Grundsätzlich können die erfindungsgemäßen Katalysatoren zusätzlich zu den katalytisch aktiven, sauerstoffhaltigen Molybdän- und/oder Wolframverbindungen noch mit 0,05 bis 10 Gew.-%, vorzugsweise mit 0,1 bis 5 Gew.-%, insbesondere mit 0,25 bis 3 Gew.-%, sauerstoffhaltigen Schwefel- und/oder Phosphor-enthaltenden Verbindungen jeweils berechnet auf das Gesamtgewicht des Katalysators, dotiert sein. Da ebenfalls nicht bekannt ist, in welcher chemischen Form diese schwefel- bzw. phosphorhaltigen Verbindungen im fertigen Katalysator vorliegen, werden die Gehalte dieser Gruppen im Katalysator pauschal als $SO_4$ bzw. $PO_4$ berechnet.

Zur Herstellung der erfindungsgemäßen Katalysatoren wird in der Regel von den Hydroxiden der betreffenden Trägerkomponenten ausgegangen. Soweit diese Hydroxide kommerziell erhältlich sind, können im Handel erhältliche Hydroxide als Ausgangsmaterialien zur Herstellung der oxidischen Träger eingesetzt werden, vorzugsweise werden jedoch frisch gefällte Hydroxide zur Herstellung der oxidischen Träger verwendet, die nach ihrer Fällung im allgemeinen bei 20 bis 350 °C, vorzugsweise bei 50 bis 150 °C, insbesondere 100 bis 120 °C, bei Atmosphärendruck oder vermindertem Druck getrocknet werden.

Als Ausgangsverbindungen zur Herstellung dieser Hydroxide dienen im allgemeinen die wasserlöslichen oder hydrolysierbaren Salze der das Trägermaterial konstituierenden Elemente, beispielsweise deren Halogenide, vorzugsweise deren Nitrate oder Carboxylate, insbesondere deren Acetate. Geeignete Ausgangsverbindungen zur Fällung dieser Hydroxide sind z.B. Zirconylchlorid, Zirconylnitrat, Titanylchlorid, Titanylnitrat, Yttriumnitrat, Yttriumacetat, Aluminiumnitrat, Aluminiumacetat, Eisen(III)nitrat, Zinn(IV)halogenide, insbesondere Zinn(IV)chlorid, Zinknitrat oder Zinkacetat. Aus den Lösungen dieser Salze werden die entsprechenden Hydroxide vorzugsweise mittels wäßriger Ammoniaklösung ausgefällt. Alternativ können die Hydroxide durch Zugabe verdünnter oder schwacher Säuren, wie Essigsäure, zu wasserlöslichen Hydroxokomplexen der betreffenden Metalle bis zur Ausfällung des betreffenden Hydroxids, erhalten werden. Ebenso ist es möglich, die Hydroxide durch die Hydrolyse von organometallischen Verbindungen, beispielsweise den Alkoholaten der betreffenden Metalle, wie Zirkoniumtetraethanolat, Zirkoniumtetraisopropylat, Titantetramethanolat, Titantetraisopropylat usw., zu erhalten.

Im allgemeinen entsteht bei der Fällung dieser Hydroxide ein gelartiger Niederschlag, der nach Trocknung ein röntgenamorphes Pulver ergibt. Es besteht die Möglichkeit, daß diese röntgenamorphen Niederschläge außer aus den Hydroxiden der betreffenden Metalle zusätzlich aus einer Vielzahl anderer hydroxylgruppenhaltiger Verbindungen zusammengesetzt sind, beispielsweise Oxidhydraten, polymeren, wasserunlöslichen Hydroxo-Komplexen usw. Da die genaue chemische Zusammensetzung dieser Niederschläge aber nicht ermittelt werden kann, wird für die Zwecke dieser Anmeldung der Einfachheit halber angenommen, daß es sich dabei um die Hydroxide der genannten Metalle handelt. Die Bezeichnung "Hydroxide" im Sinne dieser Anmeldung stellt somit eine Sammelbezeichnung für die bei den vorgenannten Fällungsmethoden erhaltenen hydroxygruppenhaltigen Niederschläge dar.

Bei der Verwendung von Siliciumdioxid als oxidischem Trägermaterial wird zur Herstellung der erfindungsgemäß anwendbaren Katalysatoren vorzugsweise von frisch gefällter Kieselsäure ausgegangen, die beispielsweise durch Ansäuern einer Wasserglaslösung erhalten werden kann, und die zweckmäßigerweise vor Weiterverarbeitung, wie zuvor für die Hydroxidniederschläge beschrieben, getrocknet wird.

Auf die so hergestellten Hydroxide der Trägerkomponenten bzw. die Kieselsäure, die in dieser Anmeldung auch als Trägermaterialvorläufer bezeichnet werden, werden die Vorläuferverbindungen der katalytisch aktiven, sauerstoffhaltigen Molybdän- und/oder Wolframverbindungen vorzugsweise durch Imprägnierung mit einer wäßrigen Lösung dieser Vorläuferverbindungen aufgebracht. Als wasserlösliche Vorläuferverbindungen der katalytisch aktiven, sauerstoffhaltigen Wolfram- bzw. Molybdänverbindungen können beispielsweise die wasserlöslichen Salze der Wolframsäure ($H_2WO_4$), wie sie beispielsweise beim Lösen von Wolframtrioxid in wäßrigem Ammoniak entstehen, also die Monowolframate, und die daraus beim Ansäuern entstehenden Isopolywolframate, z.B. die Parawolframate oder Metawolframate, die wasserlöslichen Salze der Molybdänsäure ($H_2MoO_4$), wie sie beispielsweise beim Lösen von Molybdäntrioxid in wäßrigem Ammoniak entstehen, und die daraus beim Ansäuern sich bildenden Isopolymolybdate, insbesondere die Metamolybdate und Paramolybdate, verwendet werden. Vorzugsweise werden die Ammoniumsalze dieser Wolfram- und Molybdänsäuren als Vorläuferverbindungen auf die Hydroxide der Trägerkomponenten bzw. die Kieselsäure aufgetränkt. Zur Nomenklatur, Zusammensetzung und Herstellung der Molybdate, Isopolymolybdate, Wolframate bzw. Isopolywolframate sei auf Römpps Chemie-Lexikon, 8. Auflage, Band 4, S. 2659 - 2660, Francksche Verlagsbuchhandlung, Stuttgart, 1985; Römpps Chemie-Lexikon, 8. Auflage, Band 6, S. 4641 - 4644, Stuttgart 1988 und Comprehensive Inorganic Chemistry, 1. Ed., Vol. 3, S. 738 - 741 und 766 - 768, Perganon Press, New York 1973 verwiesen. Anstelle der zuvor genannten Molybdän- bzw. Wolfram-Vorläufer-Verbindungen der katalytisch aktiven Molybdän- bzw. Wolframverbindungen können auch Heteropolysäuren des Molybdäns bzw. Wolframs, wie 12-Wolframatokieselsäure ($H_4[Si\{W_{12}O_{40}\}]\cdot 26H_2O$) oder 12-Molybdatokieselsäure, oder deren wasserlöslichen Salze, vorzugsweise deren Ammoniumsalze, zur Aufbringung des Molybdäns bzw. Wolframs auf den hydroxidischen, d.h. Hydroxylgruppen-enthaltenden, Trägermaterialvorläufer verwendet werden. Die so getränkten Hydroxide der jeweils verwendeten Trägerkomponenten bzw. die getränkte Kieselsäure werden im allgemeinen bei Temperaturen von 80 bis 350 °C, vorzugsweise von 90 bis 150 °C, bei Atmosphärendruck oder bei vermindertem Druck getrocknet.

Es besteht auch die Möglichkeit, die genannten Vorläuferverbindungen der katalytisch aktiven, sauerstoffhaltigen Molybdän- oder Wolframverbindungen durch inniges Vermischen mit einem oder mehreren der genannten Hydroxide in den späteren Katalysator einzubringen. Die Calcinierung der so beaufschlagten Trägermaterialvorläufer zu den erfindungsgemäß anwendbaren Katalysatoren erfolgt auf die gleiche Weise wie bei den mit diesen Vorläuferverbindungen getränkten Trägermaterialvorläufern. Bevorzugt wird jedoch die Tränkmethode zur Herstellung der erfindungsgemäß anwendbaren Katalysatoren angewandt.

Die so getränkten und getrockneten Katalysatorvorläufer werden durch eine Calcinierung an der Luft bei

Temperaturen von 500 bis 1000 °C, vorzugsweise von 550 bis 900 °C und besonders bevorzugt bei Temperaturen von 600 bis 800 °C in die fertigen Katalysatoren umgewandelt. Im Zuge der Calcinierung werden die Hydroxide der Trägerkomponenten bzw. die Kieselsäure in das oxidische Trägermaterial und die darauf aufgetränkten Vorläuferverbindungen der katalytisch aktiven, sauerstoffhaltigen Molybdän- bzw. Wolframverbindungen in diese katalytisch aktiven Komponenten umgewandelt. Die Calcinierung bei diesen hohen Temperaturen ist kritisch für die Erzielung eines hohen Umsatzes und damit einer hohen Raum-Zeit-Ausbeute bei der THF-Polymerisation. Bei niedrigeren Calcinierungstemperaturen bewirken die Katalysatoren zwar ebenfalls die THF-Polymerisation, allerdings nur mit unwirtschaftlich niedrigen Umsätzen. Aufgrund von IR-Untersuchungen an derartig hergestellten Katalysatoren vermuten Yinyan et al, Rare Metals 11, 185 (1992), daß im Falle wolframdotierter Zirkoniumoxid-Trägerkatalysatoren die auf das Zirkoniumhydroxid aufgetränkte Vorläuferverbindung der katalytisch aktiven, sauerstoffhaltigen Wolframverbindung bei den angewandten hohen Calcinierungstemperaturen eine chemische Verbindung mit den Hydroxygruppen des Trägermaterialvorläufers eingeht, wobei sich die katalytisch aktive, sauerstoffhaltige Wolframverbindung bildet, die sich hinsichtlich ihrer chemischen Struktur und chemischen Aktivität, insbesondere ihren katalytischen Eigenschaften, deutlich von lediglich an das Trägermaterial Zirkondioxid adsorbierten sauerstoffhaltigen Wolframverbindungen unterscheidet. Diese Sachverhalte werden auch für die erfindungsgemäß anwendbaren molybdänhaltigen Trägerkatalysatoren angenommen.

Wie bereits erwähnt, können im erfindungsgemäßen Verfahren vorteilhaft auch Trägerkatalysatoren eingesetzt werden, die außer Molybdän und/ oder Wolfram zusätzlich mit Schwefel- und/oder Phosphor-enthaltenden Verbindungen dotiert sind. Die Herstellung dieser Katalysatoren erfolgt auf analoge Art und Weise, wie sie zuvor für die nur Molybdän- und/ oder Wolframverbindungen enthaltenden Katalysatoren beschrieben wurde, wobei zusätzlich Schwefel- und/oder Phosphor-enthaltende Verbindungen auf die auf analoge Weise hergestellten Hydroxide der Trägerkomponenten bzw. die Kieselsäure aufgetränkt werden. Die Aufbringung der Schwefel- und/oder Phosphor-Verbindungen auf das Trägermaterial kann gleichzeitig mit der Aufbringung der Molybdän- und/oder Wolframkomponente erfolgen oder im Anschluß daran. Zweckmäßigerweise werden die Schwefel- und/oder Phosphor-Komponenten durch Tränkung der Hydroxide der Trägerkomponenten bzw. der Kieselsäure mit einer wäßrigen Lösung einer Sulfat- oder Phosphat-Gruppen enthaltenden Verbindung, beispielsweise Schwefelsäure oder Phosphorsäure, hergestellt. Vorteilhaft können auch Lösungen wasserlöslicher Sulfate oder Phosphate zur Tränkung verwendet werden, wobei Ammoniumsulfate bzw. Ammoniumphosphate besonders bevorzugt sind. Eine weitere Methode, die phosphorhaltigen Vorläuferverbindungen gemeinsam mit den Molybdän oder Wolfram enthaltenden Vorläuferverbindungen auf den hydroxidischen Trägermaterialvorläufer aufzubringen, besteht darin, die hydroxidischen Trägermaterialvorläufer mit phosphorhaltigen Heteropolysäuren nach den oben beschriebenen Verfahren zu beaufschlagen. Beispielhaft seien als solche Heteropolysäuren 12-Wolframatophosphorsäure ($H_3PW_{12}O_{40}\cdot xH_2O$) und 12-Molybdatophosphorsäure ($H_3PMo_{12}O_{40}\cdot xH_2O$) genannt. Es können zu diesem Zweck auch Heteropolysäuren des Molybdäns oder Wolframs mit organischen Säuren des Phosphors, beispielsweise Phosphonsäuren, eingesetzt werden. Die genannten Heteropolysäuren können auch in Form ihrer Salze, vorzugsweise als Ammoniumsalze, zu diesem Zweck verwendet werden.

Bei der Calcinierung unter den oben genannten Bedingungen werden die Heteropolysäuren zu den katalytisch aktiven, sauerstoffhaltigen Molybdän- oder Wolframverbindungen zersetzt.

Die erfindungsgemäß anwendbaren Katalysatoren sind zum Teil bekannt und ihre Herstellung ist z.B. in JP-A 288 339/1989, JP-A 293 375/1993, J. Chem. Soc., Chem. Commun. 1259 (1987) und Rare Metals 11, 185 (1992) beschrieben. Die Katalysatoren wurden bislang überwiegend nur in petrochemischen Verfahren, beispielsweise als Katalysatoren für Alkylierungen, Isomerisierungen und das Cracken von Kohlenwasserstoffen verwendet, also Verfahren, die mit dem erfindungsgemäßen Verfahren nicht verwandt sind.

Neben den oben genannten wolfram- und molybdänhaltigen Zirkondioxiden können auch Sulfat-dotierte Zirkondioxide als Polymerisationskatalystoren eingesetzt werden. Die Eigenschaften und die Herstellung von Sulfat-dotierten Zirkondioxiden sind beispielsweise in M. Hino, K. Arata, J. Chem. Soc., Chem. Comm. 1980, 851 beschrieben.

Auch Bleicherden können im erfindungsgemäßen Verfahren als Polymerisationskatalysatoren verwendet werden. Bleicherden oder auch Fuller-Erden gehören mineralogisch zur Klasse der Montmorillonite. Hierbei handelt es sich um wasserhaltige Aluminiumhydrosilikate, die natürlich vorkommen und in denen Aluminiumionen teilweise durch Eisen, Magnesium oder andere Alkali- oder Erdalkalimetalle ersetzt sein können. Das Verhältnis von Kieselsäure zu Oxiden zwei- bzw. dreiwertiger Metalle in diesen Mineralien beträgt meistens 4 : 1. Die handelsüblichen Produkte, die meistens durch Säurebehandlung aktiviert werden und einen Wassergehalt von 4 bis 8 Gew.-%, bezogen auf Gesamtgewicht, besitzen, werden in großem Umfang zur Raffination von Speiseölen, Fetten und Mineralölen, als Adsorptionsmittel und Füllstoffe verwendet.

Besonders bevorzugt werden im erfindungsgemäßen Verfahren solche Bleicherden eingesetzt, wie sie unter der Bezeichnung Tonsil® der Typen K 10, KSF-O, KO und KS bei der Firma Süd-Chemie AG, München, erhältlich sind.

Als Polymerisationskatalysatoren können im erfindungsgemäßen Verfahren auch Zeolithe eingesetzt werden. Als Zeolithe wird eine Klasse von Aluminiumsilikaten bezeichnet, die aufgrund ihrer besonderen chemischen Struktur im Kristall dreidimensionale Netzwerke mit definierten Poren und Kanälen ausbilden. Je nach Art ihrer Zusammensetzung, insbesondere des $SiO_2$-$Al_2O_3$-Molverhältnisses und ihrer Kristallstruktur, die außer durch das genannte Atomverhältnis durch die Art und Weise der Herstellung der Zeolithe bestimmt wird, unterscheidet man verschiedenerlei Zeolith-Typen, deren Namen teilweise auf natürlich vorkommende Zeolith-Mineralien analoger Zusammensetzung und Struktur zurückgeführt werden, beispielsweise die Faujasite, Mordenite oder Clinoptilolithe, oder die, falls konkrete Analoga für die künstlich hergestellten Zeolithe in der Natur fehlen oder diese Zeolithe eine strukturelle Unterklasse der natürlich vorkommenden Zeolithe bilden, mit Akronymen bezeichnet werden, beispielsweise die zum Faujasit-Typ gehörenden Y- und X-Zeolithe oder die Zeolithe mit Pentasilstruktur, wie ZSM-5, ZSM-11 oder ZBM-10. Zusammenfassungen über die chemische Zusammensetzung der Zeolithe, ihre räumliche und chemische Struktur und über die Art und Weise ihrer Herstellung finden sich z.B. in D.W. Breck, "Zeolite Molecular Sieves", Wiley, New York, 1974.

Die für das erfindungsgemäße Verfahren geeigneten Zeolithe besitzen ein $SiO_2$-$Al_2O_3$-Molverhältnis von 4 : 1 bis 100 : 1, vorzugsweise 6 : 1 bis 90 : 1 und besonders bevorzugt 10 : 1 bis 80 : 1. Die Primärkristallite dieser Zeolithe haben eine Teilchengröße von bis zu 0,5 µm, vorzugsweise von bis zu 0,1 µm und besonders bevorzugt von bis zu 0,05 µm.

Die im erfindungsgemäßen Verfahren als Polymerisationskatalysatoren einsetzbaren Zeolithe werden in der sogenannten H-Form eingesetzt. Diese ist dadurch gekennzeichnet, daß im Zeolith azide OH-Gruppen vorliegen. Falls die Zeolithe nicht schon bei ihrer Herstellung in der H-Form anfallen, können sie leicht z.B. durch Säurebehandlung mit z.B. Mineralsäuren, wie Salzsäure, Schwefelsäure, Phosphorsäure oder durch thermische Behandlung geeigneter Vorläufer-Zeolithe, die z.B. Ammoniumionen enthalten, beispielsweise durch Erhitzen auf Temperaturen von 450 bis 600 °C, vorzugsweise von 500 bis 550 °C, in die katalytisch aktive H-Form umgewandelt werden.

Als Polymerisationskatalysatoren können im erfindungsgemäßen Verfahren alle Zeolithe eingesetzt werden, welche die zuvor genannten Voraussetzungen erfüllen. Als Beispiele hierfür seien die Zeolithe aus der Mordenit-Gruppe, Zeolithe der Faujasit-Gruppe, insbesondere die künstlich hergestellten X- und Y- Zeolithe genannt. Ebenso können auch Alumo- oder Silicoalumophosphate mit Zeolith-Struktur verwendet werden.

Besonders bevorzugt werden Zeolithe mit Pentasilstruktur verwendet, beispielsweise ZSM-5-, ZSM-11- und ZBM-10-Zeolithe. Von diesen Zeolithen aus der Pentasilgruppe haben wiederum solche besonders vorteilhafte Eigenschaften, welche so hergestellt wurden, daß sie weitgehend frei von Alkalimetallverbindungen sind, d.h. deren Alkalimetallgehalt im allgemeinen weniger als 50 Gew.-ppm beträgt. Die Herstellung alkalifreier ZBM-10-Zeolithe ist in EP-A-0 007 081 beschrieben, eine Methode zur Herstellung weitgehend alkalifreier ZSM-5-Zeolithe wird von Müller et al. in Occelli, Robson (Eds.) "Zeolite Synthesis", A.C.S. Symp. Series 398, 346 (1989) angegeben. Die nach diesen Methoden hergestellten Zeolithe liegen nach einer Temperaturbehandlung bei z.B. 500 bis 600 °C in der H-Form vor.

Neben Zeolithen können auch α-Fluorsulfonsäure-Gruppen enthaltende Polymere als Polymerisationskatalysatoren verwendet werden. Bevorzugt sind perfluorhaltige α-Fluorsulfonsäure-Gruppen enthaltende Polymere, die z.B. unter der Bezeichnung Nafion® bei der Firma E.I. du Pont de Nemours and Company angeboten werden.

Die erfindungsgemäß anwendbaren Katalysatoren können in Form von Pulver, beispielsweise bei der Durchführung des Verfahrens in Suspensionsfahrweise, oder zweckmäßigerweise als Formkörper, z.B. in Form von Zylindern, Kugeln, Ringen, Spiralen oder Splitt, insbesondere bei einer Festbettanordnung des Katalysators, welche bei Verwendung von z.B. Schlaufenreaktoren oder beim kontinuierlichen Betrieb des Verfahrens bevorzugt ist, im erfindungsgemäßen Verfahren eingesetzt werden.

Als Monomer kann grundsätzlich jedes beliebige THF eingesetzt werden. Bevorzugt wird handelsübliches oder durch Säurebehandlung (vgl. EP-A-0 003 112) oder destillativ vorgereinigtes THF eingesetzt.

Als Telogen, d.h. als Substanz, die den Kettenabbruch der Polymerisationsreaktion bewirkt, wird erfindungsgemäß 2-Butin-1,4-diol verwendet.

Das Telogen wird zweckmäßigerweise gelöst im THF der Polymerisation zugeführt. Da das Telogen den Abbruch der Polymerisation bewirkt, läßt sich über die eingesetzte Telogenmenge das mittlere Molekulargewicht des ungesättigten PTHF-Copolymers steuern. Je mehr Telogen im Reaktionsgemisch enthalten ist, desto niedriger wird das mittlere Molekulargewicht des ungesättigten PTHF-Copolymers. Je nach Telogengehalt der Polymerisationsmischung können die betreffenden PTHF-Copolymere mit mittleren Molekulargewichten von 250 bis 10.000 gezielt hergestellt werden. Vorzugsweise werden mit dem erfindungsgemäßen Verfahren die betreffenden PTHF-Copolymere mit mittleren Molekulargewichten von 500 bis 5.000 Dalton, besonders bevorzugt von 650 bis 3.500 Dalton, hergestellt. Hierzu wird das Telogen, bezogen auf die eingesetzte THF-Menge in Mengen von 0,04 bis 17 mol-%, vorzugsweise von 0,2 bis 8 mol-% und besonders bevorzugt von 0,4 bis 4 mol-%, zugesetzt.

Die Polymerisation wird im allgemeinen bei Temperaturen von 0 bis 100°C, vorzugsweise von 25 °C bis zur Siedetemperatur des THF, durchgeführt. Der angewandte Druck ist in der Regel für das Ergebnis der Polymerisation nicht kritisch, weshalb im allgemeinen bei Atmosphärendruck oder unter dem Eigendruck des Polymerisationssystems gearbeitet wird.

Zur Vermeidung der Bildung von Etherperoxiden wird die Polymerisation vorteilhaft unter einer Inertgasatmosphäre vollzogen. Als Inertgase können z.B. Stickstoff, Wasserstoff, Kohlendioxid oder die Edelgase dienen, bevorzugt wird Stickstoff verwendet.

Die Polymerisationsstufe des erfindungsgemäßen Verfahrens kann diskontinuierlich oder kontinuierlich

durchgeführt werden, wobei aus wirtschaftlichen Gründen in der Regel die kontinuierliche Betriebsweise bevorzugt wird.

Bei der diskontinuierlichen Betriebsweise werden die Reaktanten THF, 2-Butin-1,4-diol und der Katalysator im allgemeinen in einem Rührkessel oder Schlaufenreaktor bei den angegebenen Temperaturen solange umgesetzt, bis der gewünschte Umsatz des THF erreicht ist. Die Reaktionszeit kann in Abhängigkeit von der zugesetzten Katalysatormenge 0,5 bis 40, vorzugsweise 1 bis 30 Stunden betragen. Die Katalysatoren werden zur Polymerisation im allgemeinen in einer Menge von 1 bis 90 Gew.-%, vorzugsweise 4 bis 70 Gew.-% und besonders bevorzugt von 8 bis 60 Gew.-%, bezogen auf das Gewicht des eingesetzten THF, zugesetzt.

Zur Aufarbeitung wird der Reaktionsaustrag im Falle der diskontinuierlichen Betriebsweise vom darin suspendierten Katalysator zweckmäßigerweise durch Filtration, Dekantieren oder Zentrifugieren abgetrennt.

Der vom Katalysator befreite Polymerisationsaustrag wird im allgemeinen destillativ aufgearbeitet, wobei in einer ersten Stufe zweckmäßigerweise nicht umgesetztes THF abdestilliert wird. In einer zweiten Reinigungsstufe kann dann gewünschtenfalls niedermolekulares PTHF vom Polymerisat durch Destillation bei vermindertem Druck abgetrennt und in die Umsetzung zurückgeführt werden. Alternativ hierzu können flüchtige THF-Oligomere, beispielsweise nach dem Verfahren von DE-A 30 42 960, depolymerisiert und auf diese Weise wieder in die Umsetzung zurückgeführt werden.

In einer bevorzugten Ausführungsform der Erfindung erfolgt die Umwandlung der C-C-Dreifachbindungen enthaltenden Copolymere aus THF und 2-Butin-1,4-diol in PTHF durch katalytische Hydrierung.

Bei der Durchführung der Hydrierung werden die C-C-Dreifachbindungen enthaltenden Copolymere Wasserstoff an einem Hydrierkatalysator bei einem Druck von im allgemeinen 1 bis 300 bar, vorzugsweise von 20 bis 250 bar und insbesondere von im allgemeinen 40 bis 200 bar, und bei einer Temperatur von 20 bis 300 °C, vorzugsweise von 60 bis 200 °C und besonders bevorzugt von 100 bis 160 °C zu Polyoxytetramethylenglycol umgesetzt.

Die Hydrierung kann ohne Lösungsmittel oder vorteilhaft in Anwesenheit eines unter den Reaktionsbedingungen inerten Lösungsmittels durchgeführt werden. Derartige Lösungsmittel können beispielsweise sein: Ether wie beispielsweise Tetrahydrofuran, Methyl-tert.-butylether oder Di-n-butylether, Alkohole wie beispielsweise Methanol, Ethanol, Propanol, i-Propanol, Butanol, 1-Butanol oder tert-.Butanol, Kohlenwasserstoffe wie beispielsweise n-Hexan, n-Heptan oder n-Octan und N-Alkyl-Lactame wie beispielsweise N-Methylpyrrolidon oder N-Octylpyrrolidon. Bevorzugtes Lösungsmittel ist Tetrahydrofuran. Besonders bevorzugt werden die Polymerisationsausträge, die nach Abtrennung des Polymerisationskatalysators anfallen, hydriert.

Als Hydrierkatalysatoren können im erfindungsgemäßen Verfahren im allgemeinen alle zur Hydrierung von C-C-Dreifachbindungen geeigneten Katalysatoren Verwendung finden. Es können homogen im Reaktionsmedium lösliche Hydrierkatalysatoren, wie sie beispielsweise in Houben-Weyl, Methoden der Organischen Chemie, Band IV/lc, S. 16 bis 26 beschrieben werden, benutzt werden.

Vorzugsweise wird im erfindungsgemäßen Verfahren jedoch mit heterogenen Hydrierkatalysatoren gearbeitet, also solchen Hydrierkatalysatoren, die im Reaktionsmedium im wesentlichen unlöslich sind. Prinzipiell können praktisch alle heterogenen Hydrierkatalysatoren zur Hydrierung der C-C-Dreifachbindungen der Copolymere zu C-C-Einfachbindungen verwendet werden. Von diesen Hydrierkatalysatoren sind solche bevorzugt, die ein oder mehrere Elemente der Gruppe Ib, VIIb und VIIIb des Periodensystems der Elemente, insbesondere Nickel, Kupfer und/oder Palladium, enthalten.

Außer diesen Komponenten und gegebenenfalls einem Trägermaterial können diese Katalysatoren eines oder mehrere andere Elemente, wie Chrom, Wolfram, Molybdän, Mangan und/oder Rhenium, enthalten. Herstellungsbedingt können auch oxidierte Phosphorverbindungen, z.B. Phosphate, in den Katalysatoren enthalten sein.

Im erfindungsgemäßen Verfahren können heterogene Hydrierkatalysatoren verwendet werden, die aus Metallen in aktivierter, feinverteilter Form mit großer Oberfläche bestehen, beispielsweise Raney-Nickel, Raney-Kupfer oder Palladiumschwamm.

Des weiteren können im erfindungsgemäßen Verfahren z.B. sogenannte Fällungskatalysatoren verwendet werden. Solche Katalysatoren können hergestellt werden, indem man ihre katalytisch aktiven Komponenten aus deren Salzlösungen, insbesondere aus den Lösungen von deren Nitraten und/oder Acetaten, beispielsweise durch Zugabe von Lösungen von Alkalimetall- und/oder Erdalkalimetallhydroxid- und/oder -carbonatlösungen, als z.B. schwerlösliche Hydroxide, Oxidhydrate, basische Salze oder Carbonate ausfällt, die erhaltenen Niederschläge anschließend trocknet und diese dann durch Calcinierung bei im allgemeinen 300 bis 700 °C, insbesondere 400 bis 600 °C in die betreffenden Oxide, Mischoxide und/oder gemischtvalentigen Oxide umwandelt, welche durch eine Behandlung mit Wasserstoff oder mit Wasserstoff enthaltenden Gasen bei in der Regel 100 bis 700 °C, insbesondere bei 150 bis 400 °C, zu den betreffenden Metallen und/oder oxidischen Verbindungen niederer Oxidationsstufe reduziert und in die eigentliche, katalytisch aktive Form überführt werden. Dabei wird in der Regel so lange reduziert, bis kein Wasser mehr gebildet wird.

Bei der Herstellung von Fällungskatalysatoren, die ein Trägermaterial enthalten, kann die Fällung der katalytisch aktiven Komponenten in Gegenwart des betreffenden Trägermaterials erfolgen. Die katalytisch aktiven Komponenten können vorteilhaft aber auch gleichzeitig mit dem Trägermaterial aus den betreffenden Salzlösungen gefällt werden.

Des weiteren können als heterogene Hydrierkatalysatoren im erfindungsgemäßen Verfahren auch auf herkömmliche Weise hergestellte Trägerkatalysatoren verwendet werden, die eines oder mehrere der oben genannten katalytisch aktiven Elemente enthalten. Solche Trägerkatalysatoren werden zweckmäßigerweise durch Imprägnierung des Trägermaterials mit einer Metallsalzlösung der betreffenden Elemente, anschließende Trocknung und Calcinierung bei im allgemeinen 300 bis 700 °C, vorzugsweise bei 400 bis 600 °C, und Reduktion in einem Wasserstoff enthaltenden Gasstrom hergestellt. Die Trocknung der imprägnierten Träger wird im allgemeinen bei Temperaturen von 20 bis 200 °C, vorzugsweise 50 bis 150 °C, bei Atmosphärendruck oder vermindertem Druck vorgenommen. Höhere Trocknungstemperaturen sind ebenfalls möglich. Die Reduktion der katalytisch aktiven Katalysatorkomponenten erfolgt im allgemeinen unter den Bedingungen, wie sie zuvor für die Fällungskatalysatoren angegeben wurden.

Als Trägermaterialien können im allgemeinen die Oxide der Erdakalimetalle des Aluminiums und Titans, Zirkoniumdioxid, Siliciumdioxid, Kieselgur, Kieselgel, Tonerden, Silikate, wie Magnesium- oder Aluminiumsilikate, Bariumsulfat oder Aktivkohle verwendet werden. Bevorzugte Trägermaterialien sind Zirkoniumdioxid, Aluminiumoxide, Siliciumdioxid und Aktivkohle. Selbstverständlich können auch Mischungen verschiedener Trägermaterialien als Träger für im erfindungsgemäßen Verfahren anwendbare Katalysatoren dienen.

Bevorzugt werden im erfindungsgemäßen Verfahren als Hydrierkatalysatoren Raney-Nickel, Raney-Kupfer, Palladiumschwamm, imprägnierte Trägerkatalysatoren, wie Palladium-auf-Aktivkohle, Palladium-auf-Aluminiumoxid, Palladium-auf-Siliciumdioxid, Palladium-auf-Calciumoxid, Palladium-auf-Bariumsulfat, Nickel-auf-Aluminiumoxid, Nickel-auf-Siliciumdioxid, Nickel-auf-Zirkoniumdioxid, Nickel-auf-Titandioxid, Nickel-auf-Aktivkohle, Kupfer-auf-Aluminiumoxid, Kupfer-auf-Siliciumdioxid, Kupfer-auf-Zirkoniumdioxid, Kupfer-auf-Titandioxid, Kupfer-auf-Aktivkohle oder Nickel-und-Kupfer-auf-Siliciumdioxid sowie Trägermaterial enthaltende Fällungskatalysatoren, wie Ni-Cu-auf-Zirkoniumdioxid, Ni/Cu-auf-Aluminiumoxid, oder Ni/Cu-auf-Titandioxid.

Besonders bevorzugt werden im erfindungsgemäßen Hydrierverfahren zur Herstellung von Polytetrahydrofuran Raney-Nickel, die oben genannten Palladium-Trägerkatalysatoren, insbesondere Palladium-auf-Aluminiumoxid oder Palladium auf einem Träger aus Aluminiumoxid und Calciumoxid, sowie Nickel- und Kupfer auf einem Trägermaterial enthaltende Fällungskatalysatoren, insbesondere Nickel- und Kupfer-auf-Zirkoniumdioxid-Katalysatoren, eingesetzt.

Die Palladiumträgerkatalysatoren enthalten im allgemeinen 0,2 bis 10, vorzugsweise 0,5 bis 5 Gew.-% Palladium, berechnet als Pd und bezogen auf das Gesamtgewicht des Katalysators. Das Aluminiumoxid-Calciumoxid-Trägermaterial für die Palladium-Trägerkatalysatoren kann im allgemeinen bis zu 50 Gew.-%, vorzugsweise bis zu 30 Gew.-% Calciumoxid, bezogen auf das Gewicht des Trägermaterials, enthalten.

Weitere bevorzugte Trägerkatalysatoren sind Nickel- und Kupfer-auf-Siliciumdioxid-Katalysatoren mit einem Nickelgehalt, berechnet als NiO, von im allgemeinen 5 bis 40, vorzugsweise von 10 bis 30 Gew.-%, einem Kupfergehalt, berechnet als CuO, von im allgemeinen 1 bis 15, vorzugsweise von 5 bis 10 Gew.-% und einem $SiO_2$-Gehalt von im allgemeinen 10 bis 90, vorzugsweise von 30 bis 80 Gew.-%, jeweils bezogen auf das Gesamtgewicht des oxidischen, nichtreduzierten Katalysators. Diese Katalysatoren können zusätzlich noch 0,1 bis 5 Gew.-% Mangan, berechnet als $Mn_3O_4$ und 0,1 bis 5 Gew.-% Phosphor, berechnet als $H_3PO_4$, jeweils bezogen auf das Gesamtgewicht des oxidischen, nichtreduzierten Katalysators enthalten. Es versteht sich von selbst, daß sich die vorgenannten Gehaltsangaben der Katalysatorkomponenten einander zu einem Gesamtgehalt des Katalysators an diesen Komponenten von 100 Gew.-% ergänzen. Zweckmäßigerweise werden diese Katalysatoren durch Tränken von Siliciumdioxid-Formkörpern mit Salzlösungen der katalytisch aktiven Komponenten, beispielsweise mit Lösungen von deren Nitraten, Acetaten oder Sulfaten, anschließende Trocknung der imprägnierten Träger bei Temperaturen von 20 bis 200 °C, vorzugsweise 100 bis 150 °C, unter Atmosphärendruck oder reduziertem Druck, Calcinierung bei 400 bis 600 °C, vorzugsweise 500 bis 600 °C, und Reduktion mit wasserstoffhaltigen Gasen hergestellt. Solche Katalysatoren sind z.B. aus EP-A-295 435 bekannt.

Die Nickel- und Kupfer-auf-Zirkoniumdioxid-Fällungskatalysatoren können im allgemeinen 20 bis 70, vorzugsweise 40 bis 60 Gew.-% Nickel, berechnet als NiO, Kupfer, berechnet als CuO in Mengen von im allgemeinen 5 bis 40, vorzugsweise 10 bis 35 Gew.-%, und Zirkoniumdioxid in Mengen von im allgemeinen 25 bis 45 Gew.-%, jeweils bezogen auf das Gesamtgewicht des oxidischen, nichtreduzierten Katalysators, enthalten. Zusätzlich können diese Katalysatoren noch 0,1 bis 5 Gew.-% Molybdän, berechnet als $MoO_3$ und bezogen auf das Gesamtgewicht des oxidischen, nichtreduzierten Katalysators, enthalten. Solche Katalysatoren und deren Herstellung sind aus US-A-5,037,793 bekannt, auf die hiermit Bezug genommen wird.

Die Aktivierung der Fällungskatalysatoren als auch der Trägerkatalysatoren kann auch in situ in der Reaktionsmischung durch den dort anwesenden Wasserstoff erfolgen. In einer bevorzugten Ausgestaltung der Erfindung werden jedoch die Katalysatoren vor Gebrauch mit Wasserstoff bei Temperaturen zwischen 20 und 300 °C, vorzugsweise zwischen 80 und 250 °C, reduziert.

Die Hydrierstufe des erfindungsgemäßen Verfahrens kann sowohl kontinuierlich als auch diskontinuierlich

ausgeübt werden. Bei der kontinuierlichen Betriebsweise können beispielsweise Rohrreaktoren eingesetzt werden, in denen der Katalysator vorteilhaft in Form eines Festbetts angeordnet ist, über das die Reaktionsmischung in Sumpf- oder Rieselfahrweise geleitet werden kann.

Bei der diskontinuierlichen Betriebsweise können sowohl einfache Rührreaktoren oder vorteilhaft Schlaufenreaktoren verwendet werden. Bei Verwendung von Schlaufenreaktoren wird der Katalysator zweckmäßigerweise in Form eines Festbetts angeordnet. Die Hydrierung des erfindungsgemäßen Verfahrens wird bevorzugt in der Flüssigphase durchgeführt.

Die Isolierung des Hydrierproduktes Polytetrahydrofuran (PTHF) aus dem Hydrieraustrag erfolgt im allgemeinen auf an sich herkömmliche Weise, beispielsweise durch die destillative Entfernung des im Hydrieraustrag enthaltenen Lösungsmittels und gegebenenfalls vorhandenen anderen niedermolekularen Verbindungen.

Das erfindungsgemäße Verfahren liefert Polytetrahydrofuran sehr niedriger Farbzahl bei hohen Raum-Zeit-Ausbeuten und einfacher Katalysatorabtrennung. Gleichzeitig besitzt das erfindungsgemäß hergestellte Polytetrahydrofuran ein Molekulargewicht im technisch interessanten Bereich von 500 bis 3.500.

In einer weiteren Ausführungsform der Erfindung werden die C-C-Dreifachbindungen der Copolymere aus THF und 2-Butin-1,4-diol durch Partialhydrierung in C-C-Doppelbindungen umgewandelt, wobei ein Polymer gebildet wird, das gemäß seiner chemischen Struktur einem THF/2-Buten-1,4-diol-Copolymer entspricht. Solche THF/2-Buten-1,4-diol-Copolymere dienen beispielsweise als Diolkomponente zur Herstellung strahlungshärtbarer Polyurethan- und Polyesterlacke.

Zur Hydrierung der C-C-Dreifachbindungen zu C-C-Doppelbindungen können die zuvor für die Hydrierung der C-C-Dreifachbindungen zu C-C-Einfachbindungen genannten Katalysatoren eingesetzt werden, wobei aber im allgemeinen darauf zu achten ist, daß die zur Partialhydrierung eingesetzte Wasserstoffmenge die stöchiometrische Menge an Wasserstoff nicht übersteigt, die zur Partialhydrierung der C-C-Dreifachbindungen zu C-C-Doppelbindungen benötigt wird.

Bevorzugt werden zur Partialhydrierung der C-C-Dreifachbindungen zu C-C-Doppelbindungen partiell vergiftete Hydrierkatalysatoren verwendet, beispielsweise Lindlar-Palladium, das durch Imprägnieren eines Trägermaterials, z.B. Calciumcarbonat mit einer wasserlöslichen Palladiumverbindung, z.B. $Pd(NO_3)_2$, Reduktion der aufgebrachten Palladiumverbindung mit z.B. Wasserstoff zu Palladiummetall und anschließende partielle Vergiftung des so hergestellten Palladium-Trägerkatalysators mit einer Bleiverbindung, z.B. Blei(II)acetat, hergestellt werden kann. Solche Lindlar-Katalysatoren sind im Handel erhältlich.

Andere bevorzugte, partiell vergiftete Palladiumkatalysatoren sind die in der deutschen Patentanmeldung Anmelde-Nr. P 43 33 293.5 beschriebenen Katalysatoren, die durch sukzessive Gasphasenabscheidung von zunächst Palladium, anschließend von Blei und/oder Cadmium, auf ein Metalldrahtgewebe oder eine Metallfolie hergestellt werden können.

Die Partialhydrierung der C-C-Dreifachbindungen der Tetrahydrofuran/But-2-in-1,4-diol-Copolymere zu C-C-Doppelbindungen wird im allgemeinen bei Temperaturen von 0 bis 100 °C, vorzugsweise 0 bis 50 °C und besonders bevorzugt von 10 bis 30 °C, und bei einem Druck von 1 bis 50 bar, vorzugsweise 1 bis 5 bar, insbesondere 2 bis 3 bar, durchgeführt. Der Wasserstoff wird vorzugsweise in der zur Partialhydrierung der C-C-Dreifachbindungen benötigten stöchiometrischen Menge eingesetzt. Sollen nicht alle C-C-Dreifachbindungen zu Doppelbindungen hydriert werden, kann der Wasserstoff auch in einer geringeren Menge als der stöchiometrischen zudosiert werden. Die Hydrierung kann sowohl diskontinuierlich, z.B. in Rührkesseln mit Suspensionskatalysatoren, oder kontinuierlich, z.B. in Rohrreaktoren mit einer Festbettanordnung des Katalysators, durchgeführt werden.

Die Erfindung wird anhand der folgenden Beispiele erläutert, die bevorzugte Ausführungsformen der Erfindung darstellen.

**Herstellung der Katalysatoren**

**Katalysator A:**

Als Katalysator A wurde pulverfömige Bleicherde K 10 (säurebehandelter Montmorillonit der Fa. Süd-Chemie), die zusätzlich 2 Stunden bei 350 °C calciniert wurde, verwendet.

**Katalysator B:**

Als Ausgangsmaterial für Katalysator B diente ebenfalls Bleicherde K 10 der Firma Süd-Chemie in Pulverform, die zu 2,5 mm-Strängen verformt und anschließend bei 350 °C calciniert wurde.

**Katalysator C:**

Katalysator C wurde hergestellt durch Zugabe von 2600 g Zirkoniumhydroxid zu 2260 g einer 26,5 gew.-%igen $MoO_3$-Lösung in 12%igem Ammoniak. Diese Mischung wurde 30 Minuten geknetet und danach 16 h bei 120°C getrocknet. Die getrocknete Masse wurde mit 40 g 75%iger Phosphorsäure und 1,4 l Wasser 30 Minuten geknetet. Danach wurde 2 h bei 120°C getrocknet. Das nach einer Siebung entstandene Pulver wurde tablettiert, die entstandenen Tabletten anschließend bei 600°C 2 h calciniert. Der Katalysator hatte einen Molybdängehalt, berechnet als Molybdäntrioxid, von 20 Gew.-% und einen Phosphorgehalt, berechnet als $PO_4$, von 1 Gew.-%, bezogen auf das Gesamtgewicht des Katalysators.

**Katalysator D:**

Katalysator D wurde hergestellt durch Zugabe von 2600 g Zirkoniumhydroxid zu einer Lösung von 640 g Wolframsäure ($H_2WO_4$) in 3470 g 25%iger Ammoniaklösung. Diese Mischung wurde 30 Minuten geknetet und danach 2 h bei 120°C getrocknet. Das nach einer Siebung entstandene Pulver wurde tablettiert, die entstandenen Tabletten (3 x 3 mm) anschließend bei 625°C calciniert. Der Katalysator hatte einen Wolframgehalt, berechnet als Wolframtrioxid, von 20 Gew.-%, bezogen auf das Gesamtgewicht des Katalysators.

**Katalysator E:**

Katalysator E wurde hergestellt durch Zugabe von 1600 g Zirkoniumhydroxid zu einer Lösung von 425 g Wolframsäure und 200 g Ammoniumsulfat in 3470 g 25%iger Ammoniaklösung. Diese Mischung wurde 30 Minuten geknetet und danach 2 h bei 120°C getrocknet. Das nach einer Siebung entstandene Pulver wurde tablettiert, die entstandenen Tabletten anschließend bei 850°C 2 h calciniert. Der Katalysator hatte einen Wolframgehalt, berechnet als Wolframtrioxid, von 18 Gew.-% und einen Schwefelgehalt, berechnet als $SO_4$, von 7 Gew.-%, bezogen auf das Gesamtgewicht des Katalysators.

**Katalysator F:**

Katalysator F wurde nach einer Herstellvorschrift von M. Hino, K. Arata, J. Chem. Soc., Chem. Comm. 1980, 851 hergestellt, wobei Zirkonhydroxid aus einer wäßrigen Zirkonylnitratlösung durch Zugabe von Ammoniak gefällt wurde. Das gefällte Zirkonhydroxid wurde bei 100°C getrocknet, mit 1n-Schwefelsäure geknetet und anschließend zu 3 ∗ 3 mm-Tabletten verformt. Die Tabletten wurden bei 100°C getrocknet und bei 550°C 2 h calciniert. Der Katalysator wies einen Schwefelgehalt, berechnet als $SO_4$, von 6 Gew.-%, bezogen auf das Gesamtgewicht des Katalysators, auf.

**Bestimmung der Azidität der Katalysatoren**

Die Bestimmung der Azidität der Katalysatoren A bis F erfolgte wie in K. Tanabe, in "Catalysis: Science and Technology" (eds. J.R. Anderson and M. Bondart), Springer-Verlag, Berlin, 1981, Vol. 2, Kap. 5, S. 235 ff, beschrieben durch n-Butylamin-Titration gegen den Hammet-Indikator 2-Amino-5-azotoluol ($pK_a = +2{,}0$). Die Katalysatoren wurden zuvor bei einer Temperatur von 200°C und einem Druck von 0,01 mbar getrocknet. Als Lösungsmittel wurde Benzol verwendet.

Zur Bestimmung seiner Azidität wurde der jeweilige Katalysator in Benzol suspendiert und in Anwesenheit des Indikators mit n-Butylamin titriert. Der Indikator ist in seiner basischen Form gelb und wechselt seine Farbe zu Rot (saure Form), sobald er auf der Oberfläche des Katalysators adsorbiert ist. Der Titer an n-Butylamin, der erforderlich ist, um die gelbe Farbe des Indikators wiederherzustellen, ist ein Maß für die Konzentration der Säurezentren der Säurestärke $pK_a < +2$ des Katalysators, ausgedrückt in mmol/g Katalysator bzw. Milliäquivalent (mval)/g Katalysator, und damit seine Azidität.

**Bestimmung der Molekulargewichte**

Das mittlere Molekulargewicht ($M_n$) der THF/Butindiol-Copolymere und des PTHF wurde durch Endgruppenanalyse $^1$H-NMR-spektroskopisch bestimmt. $M_n$ ist definiert durch die Gleichung in der $c_i$ für die Konzentration der einzelnen Polymerspecies im erhaltenen Polymergemisch steht und in der $M_i$ das Molekulargewicht der einzelnen Polymerspecies bedeutet.

$$M_n = \Sigma\, c_i / \Sigma\, (c_i/M_i)$$

Die durch Polymerisation von THF in Gegenwart von 2-Butin-1,4-diol erhaltenen THF/Butindiol-Copolymere zeigen im $^1$H-NMR-Spektrum folgende Signale (Angabe der chemischen Verschiebung bezieht sich auf Signalmaximum; Lösungsmittel: $CDCl_3$): Signal a: 4,3 ppm; b: 4,2 ppm; c: 3,6 ppm; d: 3,5 ppm; e: 3,4 ppm; f: 1,6 ppm.

Wie in Formel I dargestellt lassen sich diese Signale den gekennzeichneten Protonen zuordnen. Zur Ermittlung des Molgewichts wurden die Flächen der Signale a, c und e berücksichtigt.

$$HO\text{-}CH^c{}_2\text{-}CH^f{}_2\text{-}CH^f{}_2\text{-}CH^e{}_2\text{-}O\text{-}\ldots\text{-}O\text{-}CH^e{}_2\text{-}CH^f{}_2\text{-}CH^f{}_2\text{-}CH^d{}_2\text{-}O\text{-}CH^b{}_2\text{-}C{\equiv}C\text{-}CH^a{}_2\text{-}OH \qquad (I)$$

## BEISPIELE

### Diskontinuierliche THF-Polymerisation in Gegenwart von 2-Butin-1,4-diol

Beispiel 1

In diesem Beispiel wurde Katalysator A eingesetzt, der eine Azidität ($pK_a < +2$) von 0,17 mmol Säurezentren/g Katalysator aufwies.

In einem 100 ml Glaskolben mit Rückflußkühler wurden unter Argongasatmosphäre 20 g peroxidfreies THF, das 1,6 Gew.-% 2-Butin-1,4-diol und 30 Gew.-ppm Wasser enthielt, mit 10 g Katalysator A in Pulverform, der zuvor zur Entfernung von adsorbiertem Wasser 20 h bei 180°C/0,3 mbar getrocknet worden war, versetzt. Die Suspension wurde 20 Stunden lang bei 50°C gerührt. Nach dieser Zeit wurde die abgekühlte Reaktionsmischung filtriert und das Katalysatorpulver dreimal mit je 20 g THF gewaschen. Die Filtrate wurden vereinigt und bei 70°C/20 mbar am Rotationsverdampfer eingeengt und anschließend noch 1 Stunde im Kugelrohr bei 150°C/0,3 mbar behandelt. Es wurden als Destillationsrückstand 3,8 g farbloses THF/Butindiol-Copolymer erhalten (Ausbeute: 19% bezogen auf eingesetztes THF). Das Copolymer wies ein mittleres Molekulargewicht von $M_n$ = 1850 auf.

**Beispiele 2 bis 6**

Die Beispiele 2 bis 6 wurden wie in Beispiel 1 beschrieben durchgeführt, wobei die verschiedenen Katalysatoren B bis F zum Einsatz kamen. Die erhaltenen mittleren Molgewichte $M_n$ der THF/Butindiol-Copolymere, die erzielten Ausbeuten sowie die durch Hammet-Titration ermittelten Aziditäten der eingesetzten Katalysatoren sind in Tabelle 1 zusammengestellt.

**Tabelle 1**

| Beispiel | Katalysator | Katalysator-Typ | Azidität ($pK_a < +2$) [mmol/g Katalysator] | Copolymer-Ausbeute [%] | $M_n$ ($^1$H-NMR) |
|---|---|---|---|---|---|
| 2 | B | Bleicherde | 0,07 | 15,9 | 2500 |
| 3 | C | $MoO_3$-$ZrO_2$-$PO_4$ | 0,10 | 14,2 | 720 |
| 4 | D | $WO_3$-$ZrO_2$ | 0,12 | 13,2 | 1700 |
| 5 | E | $WO_3$-$ZrO_2$-$SO_4^{2-}$ | 0,12 | 18,0 | 1200 |
| 6 | F | $ZrO_2$-$SO_4^{2-}$ | 0,13 | 16,8 | 950 |

### Diskontinuierliche THF-Polymerisation in Gegenwart von Butan-1,4-diol

Vergleichsbeispiel 1 (Vergleich zu Beispiel 4)

Wie in Beispiel 1 beschrieben, wurden 20 g THF, das 0,15 Gew.-% Butandiol-1,4 und 30 ppm Wasser enthielt,

mit 10 g Katalysator D in Form von 3 * 3 mm Tabletten, der zuvor 20 h bei 180°C/0,3 mbar getrocknet worden war, 20 h auf 50 °C erhitzt. Nach Abtrennung des Katalysators und Einengen des Filtrats im Vakuum wie in Beispiel 1 beschrieben wurde ein polymerer Eindampfrückstand in einer Ausbeute von nur 4,1% bezogen auf eingesetztes THF erhalten. Die PTHF-Molmasse betrug 1700.

**Kontinuierliche THF-Polymerisation in Gegenwart von 2-Butin-1,4-diol**

Beispiel 7

Ein 250 ml-Festbettreaktor wurde unter Argon mit 352 g (250 ml) des 24 h bei 180°C/0,3 mbar getrockneten $ZrO_2/SO_4$-Katalysators F befüllt. Die Polymerisationsapparatur wurde mit 2-Butin-1,4-diol-haltigem THF (1,5 Gew.-% 2-Butin-1,4-diol) gefüllt. Zunächst wurde dieses Reaktionsgemisch 24 h lang bei 50°C Reaktortemperatur über den Katalysator gepumpt. Anschließend wurde weiteres 2-Butin-1,4-diol-haltiges THF (1,5 Gew.-% 2-Butin-1,4-diol) bei einer Katalysatorbelastung von 0,04 kg THF/1 Katalysator * h kontinuierlich zugefahren. Das Umlauf-/Zulaufverhältnis lag bei etwa 40, die Reaktortemperatur betrug 50°C. Der während einer Laufzeit von 72 h anfallende Polymerisationsaustrag (730 g) wurde aufgearbeitet. Nach Abdestillieren von nichtumgesetztem THF und anschließender Kurzwegdestillation des erhaltenen Rückstands bei 150°C/0,3 mbar wurden als Destillationsrückstand 80 g eines THF/Butindiol-Copolymers erhalten, das laut $^1$H-NMR-Spektrum ein mittleres Molekulargewicht $M_n$ von 970 Dalton aufwies. Die mittlere Ausbeute über die Reaktionszeit von 72 h betrug 11%. Es wurde eine Raum-Zeit-Ausbeute von 4,4 g THF/Butindiol-Copolymer 970/1 Katalysator * h erzielt.

**Kontinuierliche THF-Polymerisation in Gegenwart von Butan-1,4-diol**

Vergleichsbeispiel 2 (Vergleich zu Beispiel 7):

Ein 250 ml-Festbettreaktor wurde unter Argon mit 372 g (220 ml) des 24 h bei 180°C/0,3 mbar getrockneten $MoO_3$-$ZrO_2$-Katalysators C befüllt. Die Polymerisationsapparatur wurde mit Butan-1,4-diol-haltigem THF (0,4 Gew.-% Butan-1,4-diol) gefüllt. Zunächst wurde dieses Reaktionsgemisch 24 h lang bei 50°C Reaktortemperatur über den Katalysator gepumpt. Anschließend wurde weiteres Butan-1,4-diol-haltiges THF (0,4 Gew.-% Butan-1,4-diol) bei einer Katalysatorbelastung von 0,04 kg THF/1 Katalysator * h kontinuierlich zugefahren. Der während einer Laufzeit von 72 h anfallende Polymerisationsaustrag (725 g) wurde wie in Beispiel 7 beschrieben durch Abdestillieren des nichtumgesetzten THF und Kurzwegdestillation aufgearbeitet. Es wurden 49 g PTHF erhalten, das laut $^1$H-NMR-Spektrum ein mittleres Molekulargewicht $M_n$ von 980 Dalton hatte. Die Ausbeute betrug 6,8%. Es wurde eine Raum-Zeit-Ausbeute von nur 2,5 g PTHF 980/1 Katalysator * h erzielt.

**Kontinuierliche THF-Polymerisation in Gegenwart von 2-Butin-1,4-diol**

Beispiel 8

Ein 250 ml-Festbettreaktor wurde unter Argon mit 333 g (250 ml) des 24 h bei 180°C/0,3 mbar getrockneten $WO_3$-$ZrO_2$-Katalysators D befüllt. Die Polymerisationsapparatur wurde mit 2-Butin-1,4-diol-haltigem THF (0,9 Gew.-% 2-Butin-1,4-diol) gefüllt. Zunächst wurde dieses Reaktionsgemisch 24 h lang bei 50°C Reaktortemperatur über den Katalysator gepumpt. Anschließend wurde weiteres 2-Butin-1,4-diol-haltiges THF (0,9 Gew.-% 2-Butin-1,4-diol) bei einer Katalysatorbelastung von 0,32 kg THF/1 Katalysator * h kontinuierlich zugefahren. Das Umlauf-/Zulaufverhältnis lag bei etwa 10, die Reaktortemperatur betrug 50 °C. Der während einer Laufzeit von 24 h anfallende Polymerisationsaustrag (1,9 kg) wurde wie in Beispiel 7 beschrieben durch Abdestillieren des nichtumgesetzten THF und Kurzwegdestillation aufgearbeitet. Es wurden 185 g eines THF/Butindiol-Copolymers erhalten, das laut $^1$H-NMR Spektrum ein mittleres Molekulargewicht $M_n$ von 2500 Dalton hatte. Die Ausbeute betrug 10%. Es wurde eine Raum-Zeit-Ausbeute von 32 g THF/Butindiol-Copolymer 2500/1 Katalysator * h erzielt.

Beispiel 9

Die in Beispiel 8 beschriebene kontinuierliche THF-Polymerisation am Katalysator D wurde mit einem Feed, der 2,0 Gew.-% 2-Butin-1,4-diol in THF enthielt, bei einer Katalysatorbelastung von 0,16 kg THF/1 Katalysator * h unter sonst gleichen Reaktionsbedingungen fortgesetzt. Nachdem sich der THF-Umsatz stabilisiert hatte, wurde der während einer Laufzeit von 72 h anfallende Reaktionsaustrag (2,9 kg) gesammelt. Nach Aufarbeitung und Kurzwegdestillation wie in Beispiel 7 beschrieben wurden 210 g THF/Butindiol-Copolymer isoliert, das gemäß $^1$H-NMR-Spektrum ein mittleres Molekulargewicht $M_n$ von 1180 hatte. Die Ausbeute betrug 7% bezogen auf eingesetztes THF. Es

wurde eine Raum-Zeit-Ausbeute von 11 g THF/Butindiol-Copolymer 1180/1 Katalysator * h erzielt.

Beispiel 10

Die in Beispiel 9 beschriebene kontinuierliche THF-Polymerisation am Katalysator D wurde mit einem Feed, der 1,5 Gew.-% 2-Butin-1,4-diol in THF enthielt, bei einer Katalysatorbelastung von 0,16 kg THF/l Katalysator * h unter sonst gleichen Reaktionsbedingungen fortgesetzt. Nachdem sich der THF-Umsatz stabilisiert hatte, wurde der während einer Laufzeit von 72 h anfallende Reaktionsaustrag (2,9 kg) gesammelt. Nach Aufarbeitung und Kurzwegdestillation wie in Beispiel 7 beschrieben wurden 280 g THF/Butindiol-Copolymer isoliert, das gemäß $^1$H-NMR-Spektrum ein mittleres Molekulargewicht $M_n$ von 1620 hatte. Die Ausbeute betrug 10% bezogen auf eingesetztes THF. Es wurde eine Raum-Zeit-Ausbeute von 16 g THF/Butindiol-Copolymer 1620/1 Katalysator * h erzielt.

Wie sich den obigen Beispielen entnehmen läßt, führt das erfindungsgemäße Verfahren bei höheren THF-Umsätzen zu einer wesentlich höheren Raum-Zeit-Ausbeute als ein nicht-erfindungsgemäßes Verfahren, bei dem anstelle von 2-Butin-1,4-diol Butan-1,4-diol als Telogen eingesetzt wird.

**HYDRIERBEISPIELE**

**Diskontinuierliche Hydrierung von THF/Butindiol-Copolymeren zu PTHF**

Beispiel 11

In einem 50 ml Metallautoklaven wurden 5 g eines analog Beispiel 1 hergestellten THF-Butindiol-Copolymers in 10 g Tetrahydrofuran mit 2 g Raney-Nickel bei einer Temperatur von 100°C und einem Druck von 40 bar 6 h lang mit Wasserstoff hydriert. Nach Abtrennung des Katalysators und Abdestillieren des Lösungsmittels bei vermindertem Druck wurden 4,8 g Rückstand erhalten. Dieser Rückstand wurde noch einer Destillation im Kugelrohr bei 150°C/0,3 mbar unterworfen. Als Destillationsrückstand wurde ein farbloses Polytetrahydrofuran erhalten, das gemäß $^1$H-NMR-Spektrum keine C-C-Dreifachbindungen mehr enthielt. Das so erhaltene PTHF hatte eine mittlere Molmassen $M_n$ von 1900.

Beispiel 12

10 g eines analog Beispiel 6 hergestellten THF-Butindiol-Copolymers, gelöst in 10 g Tetrahydrofuran, wurden mit 4 g eines Nickel und Kupfer enthaltenden Trägerkatalysators (hergestellt nach US-A-5,037,793; Nickel-Gehalt 50%, berechnet als NiO; Kupfer-Gehalt 17%, berechnet als CuO; Molybdän-Gehalt 2%, berechnet als $MoO_3$; Träger: $ZrO_2$ 31 Gew.-%; Katalysatorform: 6 x 3 mm Tabletten) bei einer Temperatur von 120 °C und einem Druck von 40 bar 6 h lang mit Wasserstoff hydriert. Der Katalysator war zuvor im Wasserstofstrom bei 200 °C während 2 h aktiviert worden. Aufarbeitung und Kurzwegdestillation des Hydrieraustrags wurden, wie in Beispiel 11 beschrieben, durchgeführt. Es wurden 9,2 g farbloses Polytetrahydrofuran erhalten, das laut $^1$H-NMR-Spektrum keine C-C-Dreifachbindungen mehr enthielt und dessen Rest-Doppelbindungsgehalt < 0,5% betrug. Das so erhaltene PTHF wies ein mittleres Molekulargewicht $M_n$ von 1020 auf.

Beispiel 13

Wie in Beispiel 11 beschrieben, wurden 10 g eines analog Beispiel 2 hergestellten THF-Butindiol-Copolymers, gelöst in 20 g Tetrahydrofuran, an 4 g eines calciumhaltigen Palladium-auf-Aluminiumoxid-Trägerkatalysators (hergestellt durch Tränken eines durch Verkneten von feuchtem $Al_2O_3$ und CaO, Trocknung bei 120°C und Calcinierung bei 550°C erhaltenen $Al_2O_3$/CaO-Trägermaterials mit einer wäßrigen Palladiumnitrat-Lösung; Palladium-Gehalt 0,6 Gew.-%, berechnet als Pd; Calcium-Gehalt 20 Gew.-%, berechnet als CaO; 79,4 Gew.-% $Al_2O_3$) in Form von 4 mm-Strängen bei 120°C und einem Druck von 40 bar 8 h lang mit Wasserstoff hydriert. Aufarbeitung und Destillation erfolgten wie in Beispiel 11 beschrieben. Es wurden 9,1 g farbloses PTHF, das ein mittleres Molekulargewicht $M_n$ von 2600 hatte, erhalten. Laut $^1$H-NMR-Spektrum enthielt das Produkt keine C-C-Dreifachbindungen mehr, der Restgehalt an C-C-Doppelbindungen betrug < 3%.

Beispiel 14

Wie in Beispiel 11 beschrieben wurden 5 g eines analog Beispiel 4 hergestellten THF-Butindiol-Copolymers in 10 g Tetrahydrofuran mit 2 g eines Palladium-auf-Aluminiumoxid-Katalysators (hergestellt durch Tränken von $Al_2O_3$-Strängen mit einer wäßrigen Palladiumnitrat-Lösung, Trocknen bei 120°C und Calcinierung bei 440°C; Palladium-Gehalt 0,5 Gew.-%, berechnet als Pd; 99,5 Gew.-% $Al_2O_3$) in Form von 4 mm-Strängen bei einer Temperatur von 140°C und einem Druck von 40 bar 6 h lang mit Wasserstoff hydriert. Der Katalysator war vorher im Wasserstoffstrom 2 h lang bei 150°C aktiviert worden. Aufarbeitung und Kugelrohrdestillation des Hydrieraustrags erfolgten wie in Beispiel 11 beschrieben. Es wurden 4,5 g farbloses PTHF erhalten, das laut $^1$H-NMR-Spektrum keine C-C-Dreifachbindungen mehr enthielt und einen Rest-Doppelbindungsgehalt von weniger als 2% aufwies. Das Molekulargewicht $M_n$ betrug 1750.

**Patentansprüche**

1. Verfahren zur Herstellung von Copolymeren aus Tetrahydrofuran und 2-Butin-1,4-diol durch katalytische Polymerisation von Tetrahydrofuran, dadurch gekennzeichnet, daß man die Polymerisation an einem heterogenen sauren Polymerisationskatalysator, der Säurezentren der Säurestärke $pK_a < +2$ in einer Konzentration von mindestens 0,005 mmol/g Katalysator besitzt, in Gegenwart von 2-Butin-1,4-diol, insbesondere in einer Menge von 0,04 bis 17 mol-%, bezogen auf Tetrahydrofuran, durchführt.

2. Verfahren nach Anspruch 1, dadurch gekennzeichnet, daß man als Polymerisationskatalysator einen oder mehrere der folgenden Katalysatoren verwendet:

   a) Trägerkatalysator, der eine katalytisch aktive Menge einer sauerstoffhaltigen Wolfram- oder Molybdänverbindung oder Gemische dieser Verbindungen auf einem oxidischen Trägermaterial enthält,
   b) Sulfat-dotiertes Zirkoniumdioxid,
   c) Bleicherde,
   d) Zeolithe in der H-Form mit einem $SiO_2$-$Al_2O_3$-Molverhältnis von 4 : 1 bis 100 : 1,
   e) perfluorhaltige $\alpha$-Fluorsulfonsäure-Gruppen enthaltende Polymere.

3. Verfahren nach Anspruch 2, dadurch gekennzeichnet, daß bei den Katalysatoren (a) nach Aufbringung der Vorläuferverbindungen der sauerstoffhaltigen Molybdän- und/oder Wolframverbindungen auf den Trägermaterial-Vorläufer bei Temperaturen von 500 bis 1000°C calciniert worden ist.

4. Verfahren nach Anspruch 2 oder 3, dadurch gekennzeichnet, daß man als oxidisches Trägermaterial Zirkoniumdioxid, Titandioxid, Hafniumoxid, Yttriumoxid, Eisenoxid, Aluminiumoxid, Zinnoxid, Siliciumdioxid, Zinkoxid oder Gemische dieser Oxide, Zirkoniumdioxid und/oder Titandioxid verwendet.

5. Verfahren nach einem der Ansprüche 2 bis 4, dadurch gekennzeichnet, daß der Trägerkatalysator 0,1 bis 50 Gew.-% Molybdän und/oder Wolfram, berechnet als Molybdäntrioxid bzw. Wolframtrioxid und bezogen auf das Gesamtgewicht des Katalysators, enthält.

6. Verfahren nach einem der Ansprüche 2 bis 5, dadurch gekennzeichnet, daß man einen Katalysator verwendet, der zusätzlich mit sauerstoffhaltigen Schwefel- und/oder Phosphor-Verbindungen dotiert ist.

7. Verfahren zur Herstellung von Polyoxytetramethylenglykol, dadurch gekennzeichnet, daß man die gemäß einem Verfahren nach einem der Ansprüche 1 bis 6 hergestellten Copolymere aus Tetrahydrofuran und 2-Butin-1,4-diol in Gegenwart von Wasserstoff bei einer Temperatur von 20 bis 300°C und einem Druck von 1 bis 300 bar an einem Hydrierkatalysator umsetzt.

8. Verfahren nach Anspruch 7, dadurch gekennzeichnet, daß man einen Hydrierkatalysator verwendet, der mindestens ein Element aus der Gruppe Ib, VIIb oder VIIIb des Periodensystems der Elemente, insbesondere Nickel, Kupfer und/oder Palladium enthält.

9. Verfahren nach Anspruch 7 oder 8, dadurch gekennzeichnet, daß man einen heterogenen Hydrierkatalysator verwendet.

10. Verfahren zur Herstellung von Doppelbindungen enthaltenden Copolymeren aus Tetrahydrofuran und 2-Butin-1,4-diol, dadurch gekennzeichnet, daß man die gemäß einem Verfahren nach einem der Ansprüche 1 bis 6 hergestellten Copolymere aus Tetrahydrofuran und 2-Butin-1,4-diol an einem Hydrierkatalysator partiell hydriert.

## Claims

1. A process for the preparation of copolymers of tetrahydrofuran and but-2-yne-1,4-diol by catalytic polymerization of tetrahydrofuran, which comprises carrying out the polymerization over a heterogeneous acidic polymerization catalyst which has acid centers of acidity $pK_a < +2$ in a concentration of at least 0.005 mmol/g of catalyst, in the presence of but-2-yne-1,4-diol, in particular in an amount of from 0.04 to 17 mol%, based on tetrahydrofuran.

2. A process as claimed in claim 1, wherein the polymerization catalyst used is one or more of the following catalysts:

   a) a supported catalyst which contains a catalytically active amount of an oxygen-containing tungsten or molybdenum compound or a mixture of these compounds on an oxide carrier,
   b) sulfate-doped zirconium dioxide,
   c) bleaching earth,
   d) zeolites in the H form, having an $SiO_2/Al_2O_3$ molar ratio of from 4:1 to 100:1, and
   e) perfluorinated polymers containing $\alpha$-fluorosulfonic acid groups.

3. A process as claimed in claim 2, wherein, in the case of the catalysts (a), calcination has been effected at from 500 to 1000°C after application of the precursor compounds of the oxygen-containing molybdenum or tungsten compounds to the carrier precursor.

4. A process as claimed in claim 2 or 3, wherein the oxide carrier used is zirconium dioxide, titanium dioxide, hafnium oxide, yttrium oxide, iron oxide, alumina, tin oxide, silica, zinc oxide or a mixture of these oxides, in particular zirconium dioxide or titanium dioxide.

5. A process as claimed in any of claims 2 to 4, wherein the supported catalyst contains from 0.1 to 50% by weight, calculated as molybdenum trioxide or tungsten trioxide and based on the total weight of the catalyst, of molybdenum or tungsten.

6. A process as claimed in any of claims 2 to 5, wherein a catalyst which is additionally doped with oxygen-containing sulfur or phosphorus compounds is used.

7. A process for the preparation of polyoxytetramethylene glycol, which comprises reacting a copolymer prepared by a process as claimed in any of claims 1 to 6 and comprising tetrahydrofuran and but-2-yne-1,4-diol, in the presence of hydrogen at from 20 to 300°C and from 1 to 300 bar over a hydrogenation catalyst.

8. A process as claimed in claim 7, wherein a hydrogenation catalyst which contains at least one element from group Ib, VIIb or VIIIb of the Periodic Table of Elements, in particular nickel, copper or palladium, is used.

9. A process as claimed in claim 7 or 8, wherein a heterogeneous hydrogenation catalyst is used.

10. A process for the preparation of copolymers of tetrahydrofuran and but-2-yne-1,4-diol, which copolymers contain double bonds, which comprises subjecting the copolymer prepared by a process as claimed in any of claims 1 to 6 and comprising tetrahydrofuran and but2-yne-1,4-diol to partial hydrogenation over a hydrogenation catalyst.

## Revendications

1. Procédé de préparation de copolymères à base de tétrahydrofuranne et de 2-butine-1,4-diol par polymérisation catalytique de tétrahydrofuranne, caractérisé en ce que l'on entreprend la polymérisation sur un catalyseur de polymérisation acide hétérogène, possédant des centres acides d'un produit d'acidité $pK_a <+2$ en une concentration d'au moins 0,005 mmole/g de catalyseur, en présence de 2-butine-1,4-diol, en particulier en quantité de 0,04 à 17% molaires par rapport au tétrahydrofuranne.

2. Procédé selon la revendication 1, caractérisé en ce que l'on utilise comme catalyseur de polymérisation l'un ou plusieurs des catalyseurs suivants:

   a) un catalyseur supporté, contenant une quantité active d'un composé oxygéné de tungstène ou de molybdène, ou des mélanges de ces composés sur un matériau de support de type oxyde,

b) du dioxyde de zirconium dopé au sulfate,
c) de l'argile absorbante,
d) des zéolithes de la forme H présentant un rapport molaire $SiO_2$-$Al_2O_3$ de 4 : 1 à 100 : 1,
e) des polymères contenant des groupes d'acide a -fluorosulfonique perfluorés.

**3.** Procédé selon la revendication 2, caractérisé en ce que, pour la catalyseur (a), on opère une calcination à des températures de 500 à 1000°C après dépôt des composés précurseurs des composés de molybdène et/ou de tungstène oxygénés sur le précurseur de matériau de support.

**4.** Procédé selon la revendication 2 Ou 3, caractérisé en ce que l'on utilise, en tant que matériau de support de type oxyde, du dioxyde de zirconium, du dioxyde de titane, de l'oxyde d'hafnium, de l'oxyde d'yttrium, de l'oxyde de fer, de l'oxyde d'aluminium, de l'oxyde d'étain, du dioxyde de silicium, de l'oxyde de zinc ou des mélanges de ces oxydes, du dioxyde de zirconium et/ou du dioxyde de titane.

**5.** Procédé selon l'une des revendications 2 à 4, caractérisé en ce que le catalyseur supporté contient de 0,1 à 50% en poids de molybdène et/ou de tungstène, calculés en tant que trioxyde de molybdène et/ou de trioxyde de tungstène et ramenés au poids total du catalyseur.

**6.** Procédé selon l'une des revendications 2 à 5, caractérisé en ce que l'on utilise un catalyseur qui est en outre dopé par des composés acides de soufre et/ou de phosphore.

**7.** Procédé de préparation de polyoxytétraméthylène glycol, caractérisé en ce que l'on fait réagir les copolymères de tétrahydrofuranne et de 2-butine-1,4-diol préparés par un procédé selon l'une des revendications 1 à 6, en présence d'hydrogène, à une température de 20 à 300°C et sous une pression de 1 à 300 bar sur un catalyseur d'hydrogénation.

**8.** Procédé selon la revendication 7, caractérisé en ce que l'on utilise un catalyseur d'hydrogénation contenant au moins un élément des groupes Ib, VIIb ou VIIIb du système périodique des éléments, en particulier du nickel, du cuivre et/ou du palladium.

**9.** Procédé selon la revendication 7 ou 8, caractérisé en ce que l'on utilise un catalyseur d'hydrogénation hétérogène.

**10.** Procédé de préparation de copolymères contenant des doubles liaisons, à base de tétrahydrofuranne et de 2-butine-1,4-diol, caractérisé en ce que l'on opère une hydrogénation partielle des copolymères de tétrahydrofuranne et de 2-butine-1,4-diol préparés par un procédé selon l'une des revendications 1 à 6 sur un catalyseur d'hydrogénation.